# EUROPEAN PATENT SPECIFICATION

(11) **EP 3 550 210 B1**
(45) Date of publication and mention of the grant of the patent: **27.09.2023**
(21) Application number: 18215006.0
(22) Date of filing: 21.12.2018
(51) Int. Cl.: F24C 7/08, F24C 15/32

(54) **COOKING APPLIANCE COMPRISING A STEAM GENERATOR AND METHOD FOR CONTROLLING SUCH A COOKING APPLIANCE**
KOCHGERÄT MIT DAMPFGENERATOR UND VERFAHREN ZUR STEUERUNG EINES SOLCHEN KOCHGERÄTS
APPAREIL DE CUISSON COMPRENANT UN GÉNÉRATEUR DE VAPEUR ET PROCÉDÉ DE COMMANDE D'UN TEL APPAREIL DE CUISSON

(30) Priority: 04.04.2018 KR 20180039202
(43) Date of publication of application: 09.10.2019
(73) Proprietor: LG Electronics Inc., Seoul 07336 (KR)
(72) Inventor: JUNG, Yoojin, 08592 Seoul (KR); SIM, Hoonseob, 08592 Seoul (KR); YANG, Jaekyung, 08592 Seoul (KR); LEE, Yongsoo, 08592 Seoul (KR); LIM, Hakjoo, 08592 Seoul (KR)
(74) Representative: Ter Meer Steinmeister & Partner

(56) References cited:
- EP-A1- 1 617 148
- EP-A1- 3 248 520
- DE-B3-102016 121 306
- US-A1- 2010 064 902
- US-B2- 8 207 477

## Description

### BACKGROUND

The present specification relates to a cooking appliance and a method for controlling the same.

The cooking appliance refers to an appliance for cooking food using heat of a heating source. The cooking appliance includes at least two heating sources for heating food contained in a cooking chamber.

The cooking appliance includes a steam generator and steam generated in the steam generator is supplied to a cooking chamber, thereby cooking food.

Korean Patent Registration Publication No. 10-0624080 discloses a heating cooker including a main body having a cooking chamber formed therein, a steam generation heater installed in the cooking chamber, a water receiver installed in the cooking chamber such that a portion of the steam generation heater is submerged, and a water supply device for supplying water to the water receiver.

According to the prior art document, after steam generation operation, the water in the water receiver is evaporated by residual heat of the steam generation heater, such that residual water does not remain in the water receiver.

However, steam supplied into the cooking chamber is condensed in the cooking chamber to drop to the bottom of the cooking chamber. The water (residual water) dropping to the bottom of the cooking chamber is not evaporated by the residual heat of the steam generation heater.

Thus, a user should remove residual water on the bottom of the cooking chamber using a rag.
US 8 207 477 B2 discloses an automatic household oven, comprising a cabinet with a cooking cavity, a heating system, a steam system containing a boiler for the purpose of steam generation and a controller for controlling the operation of the heating system and the steam system.
US 2010/064902 A1 discloses a cooker provided with a cooker main body including a heating chamber. The cooker further comprises a steam generating heater, a lower heater disposed under the bottom part of the heating chamber and a control device controlling among others the steam generating heater and the lower.
US2018/012583 discloses a household appliance with a treatment chamber, comprising a bottom portion for collecting condensed water, one heating element for heating the bottom portion of the treatment chamber and for thereby evaporating the condensed water collected inside the bottom portion.

Prior art documents DE 102016121306 B3 and EP 3248520 A1 are also considered as relevant for the present invention.

### SUMMARY

The present invention provides a cooking appliance capable of changing water dropping to the bottom of a cooking chamber into steam used for cooking in a steam cooking process, and a method for controlling the same.

The present invention provides a cooking appliance capable of increasing the amount of steam used to cook food to enable rapid cooking, and a method for controlling the same.

The present invention provides a cooking appliance, in which residual water does not remain on the bottom of a cooking chamber after steam cooking is finished, and a method for controlling the same.

The object is solved by the features of the independent claims. Preferred embodiments are given in the dependent claims.

According to the invention, a cooking appliance includes a main body including a cooking chamber, a steam generator including a steam heater for generating steam for heating food contained in the cooking chamber, a lower heater located below a bottom wall of the cooking chamber and configured to generate heat to heat the food, and a controller configured to control the steam heater and the lower heater. The controller operates the steam heater to generate steam when a steam cooking mode is selected, and turns the lower heater on while steam cooking is performed.

A recessed water collection part for collecting water is provided in the bottom wall of the cooking chamber, such that condensed water dropping the bottom wall of the cooking chamber is efficiently changed into steam.

In the present invention, the lower heater is turned on when a predetermined time has passed after the steam cooking starts.

In some embodiments, the cooking appliance may comprise a steam supply port provided in one sidewall of the cooking chamber.

In some embodiments, the cooking appliance may comprise a water tank configured to store water for generating steam to be supplied to the cooking chamber.

In some embodiments, the cooking appliance may comprise a water supply pump configured to supply water to the water tank.

In some embodiments, the cooking appliance may comprise a drainage pump for discharging water of the water tank.

According to another aspect, a cooking appliance includes a main body including a cooking chamber, a steam supply port provided in one sidewall of the cooking chamber, a water tank configured to store water used to generate steam to be supplied to the cooking chamber, a steam generator including a steam heater for heating water stored in the water tank, a water supply pump configured to supply water to the water tank, a lower heater located below a bottom wall of the cooking chamber and configured to generate heat to heat the food, and a controller configured to control the steam heater and the lower heater. The controller operates the water supply pump such that water supplied to the water tank is supplied to the cooking chamber through the steam support port before the steam heater operates, when a steam cooking mode is selected, and operates the steam heater and the lower heater after water is supplied to the cooking chamber.

A water collection part for collecting water used to generate steam is provided in the bottom wall of the cooking chamber.

Preferably, the steam generator including the water tank and the steam heater are disposed outside the cooking chamber.

The steam generator, preferably the water tank, is connected by a channel to the steam support port being preferably provided at a wall of the cooking chamber.

The lower heater may be turned off after operating for a predetermined time.

The lower heater may be turned on again once or more until the steam cooking is finished, after the lower heater is turned off, such that residual water does not remain in the water collection part.

According to another aspect, a method for controlling a cooking appliance includes starting steam cooking and operating a steam heater for generating steam to be supplied to a cooking chamber, determining whether a predetermined time has passed after the steam cooking starts, and turning a lower heater provided below a bottom wall of the cooking chamber on upon determining that the predetermined time has passed.

According to another aspect not covered by the claims, a method for controlling a cooking appliance including a water tank configured to store water used to generate steam to be supplied to a cooking chamber, a steam generator including a steam heater for heating water stored in the water tank, a water supply pump configured to supply water to the water tank, a lower heater located below a bottom wall of the cooking chamber, and a steam supply port provided in one sidewall of the cooking chamber to supply the steam generated in the water tank includes starting steam cooking and operating the water supply pump such that water passing through the water thank is supplied to the cooking chamber through the steam supply port, operating a drainage pump to discharge some of the water of the water tank after operating the water supply pump, and simultaneously or sequentially operating the steam heater and the lower heater after stopping the drainage pump.

### BRIEF DESCRIPTION OF THE DRAWINGS

FIG. 1 is a view schematically showing a cooking appliance according to an embodiment of the present invention.
FIG. 2 is a block diagram showing a cooking appliance according to an embodiment of the present invention.
FIG. 3 is a flowchart illustrating a method of controlling a cooking appliance according to an embodiment of the present invention.
FIG. 4 is a flowchart illustrating a method of controlling a cooking appliance according to another embodiment of the present invention.

### DETAILED DESCRIPTION OF THE EMBODIMENTS

Hereinafter, some embodiments of the present disclosure will be described in detail with reference to the accompanying drawings. It should be noted that when components in the drawings are designated by reference numerals, the same components have the same reference numerals as far as possible even though the components are illustrated in different drawings. Further, in description of embodiments of the present disclosure, when it is determined that detailed descriptions of well-known configurations or functions disturb understanding of the embodiments of the present disclosure, the detailed descriptions will be omitted.

Also, in the description of the embodiments of the present disclosure, the terms such as first, second, A, B, (a) and (b) may be used. Each of the terms is merely used to distinguish the corresponding component from other components, and does not delimit an essence, an order or a sequence of the corresponding component. It should be understood that when one component is "connected", "coupled" or "joined" to another component, the former may be directly connected or jointed to the latter or may be "connected", coupled" or "joined" to the latter with a third component interposed therebetween.

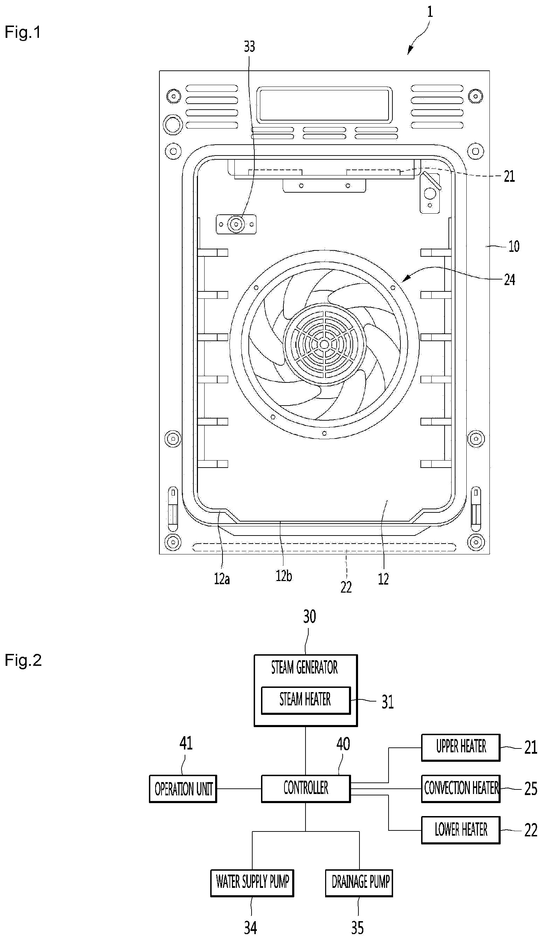

FIG. 1 is a view schematically showing a cooking appliance according to an embodiment of the present invention, and FIG. 2 is a block diagram showing a cooking appliance according to an embodiment of the present invention.

Referring to FIGS. 1 and 2, the cooking appliance 1 according to the invention includes a main body 10. The main body 10 includes a cooking chamber 12. Although not shown, the cooking appliance 1 may further include a door connected to the main body 10 to open or close the cooking chamber 12.

The cooking appliance 1 includes a plurality of heating sources in order to cook the food contained in the cooking chamber 12. The heating sources include a steam generator and may include an electric heater, a magnetron, etc. or a combination thereof.

Different types of heating sources can be installed.

Although not limited, the plurality of heating sources may include, for example, an upper heater 21, and includes a lower heater 22.

The upper heater 21 may be located at the upper side in the cooking chamber 12 and may supply heat to the upper space of the cooking chamber 12. Of course, the upper heater 21 may be located at the upper side of the cooking chamber 12, preferably outside the cooking chamber 12. In this case, an opening, through which heat passes, may be formed in the upper wall of the cooking chamber 12. Alternatively, when the upper heater generates radiant energy, a transmission part may be provided in the upper wall of the cooking chamber 12.

The lower heater 22 is located below the bottom wall 12a of the cooking chamber 12 outside the cooking chamber 12. The lower heater 22 is configured to supply heat to the lower side of the food contained in the cooking chamber 12.

A water collection part 12b, in which water may be collected, is provided in the bottom wall 12a of the cooking chamber 12. The water collection part 12b may be, for example, formed in the bottom wall 12a in a downwardly recessed shape.

Water collected in the water collection part 12b may be heated by the lower heater 22, thereby being evaporated.

The upper heater 21 and the lower heater 22 may be, for example, electric heater.

The plurality of heating sources may further include a convection heater 25 configuring a convection device 24. The convection device 24 may include a convection fan. By the convection fan, air in the cooking chamber 21 may flow to the convection heater, thereby being heated and then supplied to the cooking chamber 12.

The plurality of heating sources further includes a steam generator 30 for heating water to generate steam.

The steam generator 30 may include a water tank for storing water and a steam heater 31 for heating the water of the water tank.

When water is heated by the steam heater 31, the water may be changed into steam and the steam may be supplied into the cooking chamber 12 through a steam supply port 33 formed in one sidewall of the cooking chamber 12.

The cooking appliance 1 may further include a water supply pump 34 for supplying water to the water tank.

The cooking appliance 1 may further include a drainage pump 35 for discharging the water from the water tank of the steam generator.

The water supply pump 34 may supply water to the water tank for the steam cooking process. Preferably, during the steam cooking process, the water supply pump 34 may be intermittently operated to intermittently supply water to the water tank.

The drainage pump 35 may operate to discharge residual water remaining in the water tank after the steam cooking process.

The cooking appliance 1 may further include an operation unit 41 for selecting a cooking mode or a type of each of the plurality of heating sources and a controller 40 for controlling the plurality of heating sources by a command received from the operation unit 41.

As described above, since different types of heating sources may be provided, the cooking appliance 1 according to the present embodiment may cook various types of food using various cooking modes.

In the present invention, the cooking mode includes at least a steam cooking mode for cooking food using at least steam.

In the steam cooking mode, at least the steam heater 31 of the plurality of heating sources may operate.

Hereinafter, a method for controlling a cooking appliance according to an embodiment of the present invention.

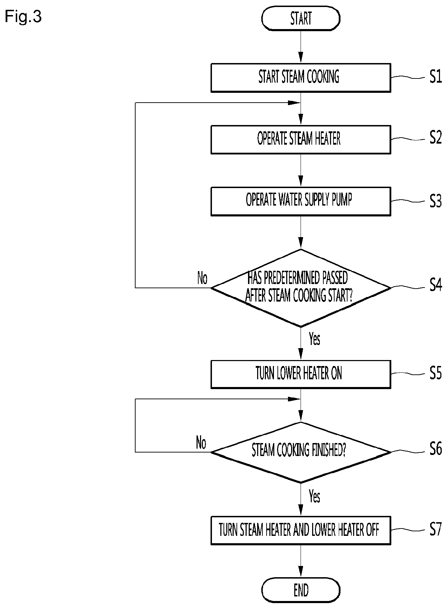

FIG. 3 is a flowchart illustrating a method of controlling a cooking appliance according to an embodiment of the present invention.

Referring to FIGS. 2 and 3, when the steam cooking mode is selected, steam cooking may start (S1).

For steam cooking, the controller 40 operates the steam heater 31 (S2). Although water is not contained in the water tank, the steam heater 31 may first operate, for preheating the water tank.

In addition, the controller 40 may operate the water supply pump 34 for supplying water to the water tank (S3).

At this time, the controller 40 may operate the drainage pump 35 for a predetermined time before operating the water supply pump 34, in order to remove water which may remain in the water tank.

When the water remains in the water tank for a long time scale may be mixed with the fresh water supplied to the water tank. The drainage pump 35 may first operate in order to discharge the scale in the water tank together with residual water.

If water is heated in a state in which the scale remains, the scale may be supplied to the cooking chamber together with steam. In this case, the scale may be attached to food. However, this may be prevented by operating the drainage pump 35 before operating the water supply pump 34.

Of course, the drainage pump 35 may first operate and then the steam heater 31 may operate.

When the steam cooking mode starts, the water supply pump 34 and the steam heater 31 may simultaneously operate.

Alternatively, the water supply pump 34 may first operate to start water supply and then the steam heater 31 may operate.

The amount of water supplied to the water tank by operation of the water supply pump 34 at the beginning of the steam cooking may be referred to as a first supply amount.

In general, the first supply amount may be set to a capacity/volume less than a maximum capacity/volume of the water tank. So the water tank is not fully filled up.,

When the steam heater 31 operates in a state of supplying water to the water tank, the water of the water tank may be heated and transferred by heat of the steam heater 31 into steam. The steam generated in the water tank may be supplied into the cooking chamber 12 through the steam supply port 33.

The steam heater 31 may be repeatedly turned on and off in the entire steam cooking process. That is, the steam heater 31 may be intermittently operated by the controller 40.

In addition, the water supply pump 34 may also be repeatedly turned on and off in the entire steam cooking process. That is, the water supply pump 34 may be intermittently operated by the controller 40.

The steam is supplied into the cooking chamber 12 for heating food inside the cooking chamber 12. Some of the steam supplied to the cooking chamber 12 may come in contact with the food. Then the steam is condensed and the condensed water is flowing along the food downwardly.

The other of the steam supplied into the cooking chamber 12 may not contact the food and may be condensed in the cooking chamber 12, thereby condensed water drops to the bottom wall 12a of the cooking chamber 12.

As described above, since the recessed water collection part 12b is provided mainly in the bottom wall 12a of the cooking chamber 12, the condensed water is collected in the water collection part 12b.

At this time, as the steam cooking time is increased, the amount of condensed water collected in the water collection part 12b may be increased.

In the present embodiment, in order to use the condensed water collected in the water collection part 12b for cooking, the controller 40 may determine whether a predetermined time has passed after the steam cooking starts (S4).

Upon determining that the predetermined time has passed after the steam cooking starts in step S4, the controller 40 turns the lower heater 22 on (S5).

When the lower heater 22 is turned on, the water collected in the water collection part 12b is heated by heat generated by the lower heater 22, thereby generating steam.

Such steam may be used to heat the food.

That is, the food may be cooked by the steam generated in the steam generator 30 in the steam cooking process and the steam generated by heating the water collected in the water collection part 12b.

According to the present invention, it is possible to increase the amount of steam used to heat the food without increasing the capacity of the water tank of the steam generator 30 or the output of the steam heater 31.

In addition, if the amount of steam used to heat the food is increased, it is possible to reduce the cooking time of the food.

The controller 40 determines whether steam cooking is finished (S6), and turns off the steam heater 31 and the upper heater 22 when steam cooking is finished (S7).

When the water stored in the water collection part 12b is heated by the lower heater 22, residual water does not remain in the water collection part 12b after the steam cooking is finished.

Accordingly, according to the present embodiment, it is possible to prevent the heater from unnecessarily operating in order to remove the residual water of the water collection part 12b after the steam cooking is finished.

In addition, since it is not necessary for the user to clean the water collection part 12b in order to remove the residual water of the water collection part 12b after the steam cooking is finished, user's troublesomeness may be removed and user convenience is increased.

In the present invention, since the amount of water collected in the water collection part 12b at the beginning of the steam cooking is small, the amount of steam generated by operating the lower heater 22 is small and thus the food may be excessively heated by heat of the lower heater 22.

Accordingly, in the present invention, the lower heater 22 is turned on only when the predetermined time has passed after the steam cooking starts. So, an excessive heating of the food by the lower heater is avoided.

Although the lower heater 22 is turned off after the steam cooking is finished in the above embodiment, the lower heater 22 may be turned off before the steam cooking is finished.

At this time, when a difference between a time when the lower heater 22 is turned off and a time when the steam cooking is finished is small, even when some of the water remains in the water collection part 12b in a state of turning the lower heater 22 off before the steam cooking is finished, the residual water remaining in the water collection part 12b may be heated by residual heat of the lower heater 22, thereby being evaporated.

As another example, the lower heater 22 may intermittently operate until the steam cooking is finished. That is, the lower heater 22 may be repeatedly turned on/off.

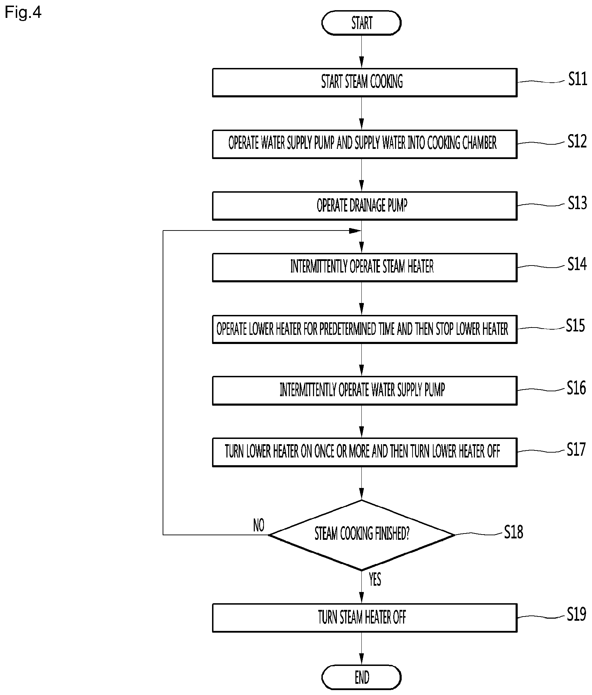

FIG. 4 is a flowchart illustrating a method of controlling a cooking appliance according to another embodiment of the present invention.

The present embodiment is equal to the previous embodiment in the configuration of the cooking appliance and is different therefrom in a method for generating additional steam by the lower heater. Accordingly, only the characteristics of the present embodiment will be described.

Referring to FIG. 4, when the steam cooking mode is selected, steam cooking may start (S11).

The controller 40 may operate the water supply pump 34 such that water is supplied to the water collection part 12b before the steam heater 31 operates (S12).

The amount of water supplied to the water tank by the water supply pump 34 may be referred to as a second supply amount.

In the present embodiment, the second supply amount of water may be greater than the first supply amount of water of the first embodiment. But essentially the second supply amount of water may be greater than the maximum capacity/volume of the water tank, such that the water overflows the water tank and passing through the water tank is supplied into the cooking chamber to be collected in the water collection part 12b.

In particular, the second supply amount may be set to a capacity/volume higher than the maximum capacity/volume of the water tank and preferably also the maximum capacity/volume of a steam channel for connecting the water tank and the steam supply port 33.

Accordingly, the water supplied to the water tank may overflow from the water tank, thereby being supplied to the cooking chamber 12 through the steam supply port 33.

In the present embodiment, since the water supplied to the water tank is supplied to the cooking chamber 12, even when scale is present in the water tank, the scale may be discharged from the water tank and moved to the bottom wall 12a of the cooking chamber 12 together with water.

At this time, since the scale is accumulated in the water collection part 12b of the cooking chamber 12, it is possible to prevent the scale from being moved to the food while the water of the water collection part 12b is heated.

When the scale is present in the water collection part 12b, the user can easily remove the scale present in the water collection part 12b after the cooking is finished.

After the water supply pump 34 operates such that the second supply amount is supplied, the controller 40 stops the water supply pump 34 and may operate the drainage pump 35 (S13).

In the present embodiment, when operation of the water supply pump 34 is stopped, the water tank is filled with water and water remains in the channel for connecting the water tank and the steam support port 33.

When the steam heater 31 operates in this state, a time required to generate steam is increased and water flows to the bottom wall 12a of the cooking chamber 12 while water is heated.

Accordingly, after operation of the water supply pump 34 is stopped, the drainage pump 35 may operate in order to discharge some of the water of the water tank.

Next, the controller 40 controls operation of the steam heater 31 such that the steam heater 31 intermittently operates (S14).

In addition, the controller 40 operates the lower heater 22 for a predetermined time such that the water of the water collection part 12 is heated to generate steam, and then turns the lower heater 22 off (S15).

At this time, the steam heater 31 and the lower heater 22 may simultaneously or sequentially start to operate.

In addition, the controller 40 controls the water supply pump 34 such that the water supply pump 34 intermittently operates (S16).

The lower heater 22 and the steam heater 31 may simultaneously operate in a period of the steam cooking process and only the steam heater 31 may operate in the other period.

As described above, in the steam cooking process, some of the steam generated by the steam generator 30 and supplied to the cooking chamber 12 may be condensed and collected in the water collection part 12b.

However, in the steam cooking process, the amount of water collected in the water collection part 12b is less than the amount of water supplied to the water collection part 12b at the beginning of the steam cooking.

Accordingly, the lower heater 22 operates to heat the water of the water collection part 12, thereby generating steam. Then, the lower heater 22 is stopped after the predetermined time has passed, such that the operation time of the lower heater 22 is prevented from being increased in a state in which water does not remain in the water collection part 12b.

Even after the lower heater 22 is stopped, the condensed water may be collected in the water collection part 12b.

Accordingly, the controller 40 may control the lower heater 22 such that the lower heater 22 is turned on and off once or more until the steam cooking is finished after the lower heater 22 operates and stops once.

The controller 40 determines whether the steam cooking is finished (S18), and turns the steam heater 31 off when the steam cooking is finished (S19).

As another example, after the lower heater 22 operates and stops once, the lower heater 22 is turned on again and is turned off before the steam cooking is finished or is turned off together with the steam heater when the steam cooking is finished.

According to the present embodiment, since the lower heater 22 operates in a state of supplying water to the water collection part 12b, the amount of steams used to heat the food in the steam cooking process can be further increased and thus the cooking time of the food can be reduced.

## Claims

1. A cooking appliance comprising:
a main body (10) including a cooking chamber (12);
a steam generator (30) including a steam heater (31) for generating steam for heating food contained in the cooking chamber (12);
a lower heater (22) located below a bottom wall (12a) of the cooking chamber (12) and configured to generate heat to heat the food;
a controller (40) configured to control the steam heater (31) and the lower heater (22);
a recessed water collection part (12b) for collecting water in the bottom wall (12a) of the cooking chamber (12),
wherein the controller (40) is configured to operate the steam heater (31) to generate steam when a steam cooking mode is selected, and to turn on the lower heater (22) while steam cooking is performed such that water collected in the recessed water collection part (12b) is heated by the lower heater (22), thereby being evaporated,
**characterized in that**
the controller (40) is configured to turn on the lower heater (22) when a predetermined time has passed after the steam cooking starts.

2. The cooking appliance of claim 1, wherein the controller (40) is configured to simultaneously turn off the steam heater (31) and the lower heater (22), upon determining that the steam cooking is finished.

3. The cooking appliance of claim 1 or 2, wherein the controller (40) is configured to repeatedly turn on/off the lower heater (22) until the steam cooking is finished.

4. The cooking appliance of claim 1, wherein the controller (40) is configured to turn the lower heater (22) off before the steam cooking is finished and to turn the steam heater (31) off upon determining that the steam cooking is finished.

5. The cooking appliance according to any one of the preceding claims, further comprising at least one of:
a steam supply port (33) provided in one sidewall of the cooking chamber (12);
a water tank configured to store water for generating steam to be supplied to the cooking chamber (12);
a water supply pump (34) configured to supply water to the water tank;
a drainage pump (35) for discharging water of the water tank.

6. The cooking appliance according to claim 5, wherein the controller (40) is configured to:
when a steam cooking mode is selected, operate the water supply pump (34) such that water supplied to the water tank is supplied to the cooking chamber (12) through the steam support port (33) before the steam heater (31) operates, and
to operate the steam heater (31) and the lower heater (22) after water is supplied to the cooking chamber (12).

7. The cooking appliance of claim 5 or 6, wherein the controller (40) is configured to operate the drainage pump (35) in order to discharge some of the water of the water tank after the water supply pump (34) operates and before the steam heater (31) operates.

8. The cooking appliance of claim 5, 6 or 7, wherein the controller (40) is configured to turn off the lower heater (22) after the lower heater (22) operates for a predetermined time.

9. The cooking appliance according to any one of the preceding claims, wherein the controller (40) is configured to turn on the lower heater (22) once or more until steam cooking is finished, after the lower heater (22) is turned off.

10. A method for controlling the cooking appliance according to any one of the preceding claims driven by the controller (40), the method comprising:
starting steam cooking and operating the
steam heater (31) for generating steam to be supplied to a cooking chamber (12);
generating heat to heat the food with the lower heater (22) located below a bottom wall (12a) of the cooking chamber (12), collecting water in the recessed water collection part (12b) disposed in the bottom wall (12a) of the cooking chamber (12),
**characterized by**:
determining whether a predetermined time has passed after the steam cooking starts; turning the lower heater (22) provided below the bottom wall (12a) of the cooking chamber (12) on upon determining that the predetermined time has passed such that water collected in the recessed water collection part (12b) is heated by the lower heater (22), thereby being evaporated.

11. The method of claim 10, further comprising:
turning off the lower heater (22) before the steam cooking is finished; and
turning off the steam heater (31) upon determining the steam cooking is finished.

12. The method of claim 10 or 11, further comprising turning the lower heater (22) on and then turning the lower heater (22) off once or more before the steam cooking is finished, after the lower heater (22) is turned off.

13. The method of claim 10, further comprising turning the steam heater (31) and the lower heater (22) off upon determining that the steam cooking is finished.

## Patentansprüche

1. Kochgerät, das Folgendes umfasst:
einen Hauptkörper (10), der eine Kochkammer (12) aufweist;
einen Dampfgenerator (30), der eine Dampfheizvorrichtung (31) zum Erzeugen von Dampf zum Erhitzen von Lebensmitteln, die in der Kochkammer (12) enthalten sind, umfasst;
eine untere Heizvorrichtung (22), die unter einer Bodenwand (12a) der Kochkammer (12) angeordnet ist und konfiguriert ist, Wärme zu erzeugen, um die Lebensmittel zu erhitzen;
eine Steuerung (40), die konfiguriert ist, die Dampfheizvorrichtung (31) und die untere Heizvorrichtung (22) zu steuern;
ein vertieftes Wassersammelteil (12b) zum Sammeln von Wasser in der Bodenwand (12a) der Kochkammer (12),
wobei die Steuerung (40) konfiguriert ist, die Dampfheizvorrichtung (31) zu betreiben, um Dampf zu erzeugen, wenn eine Dampfkochbetriebsart ausgewählt ist, und die untere Heizvorrichtung (22) einzuschalten, während das Dampfkochen ausgeführt wird, so dass Wasser, das im vertieften Wassersammelteil (12b) gesammelt ist, durch die untere Heizvorrichtung (22) erhitzt wird, wodurch es verdampft,
**dadurch gekennzeichnet, dass**
die Steuerung (40) konfiguriert ist, die untere Heizvorrichtung (22) einzuschalten, wenn eine festgelegte Zeitspanne nach dem Start des Dampfkochens verstrichen ist.

2. Kochgerät nach Anspruch 1, wobei die Steuerung (40) konfiguriert ist, die Dampfheizvorrichtung (31) und die untere Heizvorrichtung (22), wenn festgestellt wird, dass das Dampfkochen beendet ist, gleichzeitig auszuschalten.

3. Kochgerät nach Anspruch 1 oder 2, wobei die Steuerung (40) konfiguriert ist, die untere Heizvorrichtung (22) wiederholt ein- bzw. auszuschalten, bis das Dampfkochen beendet ist.

4. Kochgerät nach Anspruch 1, wobei die Steuerung (40) konfiguriert ist, die untere Heizvorrichtung (22) auszuschalten, bevor das Dampfkochen beendet ist, und die Dampfheizvorrichtung (31), wenn festgestellt wird, dass das Dampfkochen beendet ist, auszuschalten.

5. Kochgerät nach einem der vorhergehenden Ansprüche, das ferner wenigstens eines der folgenden Elemente umfasst:
eine Dampfzufuhröffnung (33), die in einer Seitenwand der Kochkammer (12) vorgesehen ist;
einen Wassertank, der konfiguriert ist, Wasser zum Erzeugen von Dampf, der der Kochkammer (12) zugeführt werden soll, zu speichern;
eine Wasserzufuhrpumpe (34), die konfiguriert ist, dem Wassertank Wasser zuzuführen;
eine Ablaufpumpe (35) zum Abführen von Wasser des Wassertanks.

6. Kochgerät nach Anspruch 5, wobei die Steuerung (40) konfiguriert ist, die folgenden Schritte auszuführen:
wenn eine Dampfkochbetriebsart ausgewählt ist, Betreiben der Wasserzufuhrpumpe (34), so dass Wasser, das dem Wassertank zugeführt worden ist, der Kochkammer (12) durch die Dampfzufuhröffnung (33) zugeführt wird, bevor die Dampfheizvorrichtung (31) betrieben wird, und
Betreiben der Dampfheizvorrichtung (31) und der unteren Heizvorrichtung (22), nachdem der Kochkammer (12) Wasser zugeführt worden ist.

7. Kochgerät nach Anspruch 5 oder 6, wobei die Steuerung (40) konfiguriert ist, die Ablaufpumpe (35) zu betreiben, um einen Teil des Wassers des Wassertanks abzuführen, nachdem die Wasserzufuhrpumpe (34) betrieben worden ist und bevor die Dampfheizvorrichtung (31) betrieben wird.

8. Kochgerät nach Anspruch 5, 6 oder 7, wobei die Steuerung (40) konfiguriert ist, die untere Heizvorrichtung (22) auszuschalten, nachdem die untere Heizvorrichtung (22) für eine festgelegte Zeitspanne betrieben worden ist.

9. Kochgerät nach einem der vorhergehenden Ansprüche, wobei die Steuerung (40) konfiguriert ist, die untere Heizvorrichtung (22) einmal oder mehrmals einzuschalten, bis das Dampfkochen beendet ist, nachdem die untere Heizvorrichtung (22) ausgeschaltet worden ist.

10. Verfahren zum Steuern des Kochgeräts nach einem der vorhergehenden Ansprüche, das durch die Steuerung (40) angesteuert wird, wobei das Verfahren die folgenden Schritte umfasst:
Starten des Dampfkochens und Betreiben der Dampfheizvorrichtung (31) zum Erzeugen von Dampf, der einer Kochkammer (12) zugeführt werden soll;
Erzeugen von Wärme zum Erhitzen der Lebensmittel mit der unteren Heizvorrichtung (22), die sich unter einer Bodenwand (12a) der Kochkammer (12) befindet,
Sammeln von Wasser im vertieften Wassersammelteil (12b), das in der Bodenwand (12a) der Kochkammer (12) angeordnet ist,
**gekennzeichnet durch**:
Feststellen, ob eine festgelegte Zeit seit dem Start des Dampfkochens verstrichen ist; und
Einschalten der unteren Heizvorrichtung (22), die unter der Bodenwand (12a) der Kochkammer (12) vorgesehen ist, wenn festgestellt wird, dass die festgelegte Zeit verstrichen ist, so dass Wasser, das im vertieften Wassersammelteil (12b) gesammelt worden ist, durch die untere Heizvorrichtung (22) erhitzt wird, wodurch es verdampft.

11. Verfahren nach Anspruch 10, das ferner die folgenden Schritte umfasst:
Ausschalten der unteren Heizvorrichtung (22), bevor das Dampfkochen beendet ist; und
Ausschalten der Dampfheizvorrichtung (31), wenn festgestellt wird, dass das Dampfkochen beendet ist.

12. Verfahren nach Anspruch 10 oder 11, das ferner das Einschalten der unteren Heizvorrichtung (22) und daraufhin das Ausschalten der unteren Heizvorrichtung (22) einmal oder mehrmals umfasst, bevor das Dampfkochen beendet ist, nachdem die untere Heizvorrichtung (22) ausgeschaltet worden ist.

13. Verfahren nach Anspruch 10, das ferner das Ausschalten der Dampfheizvorrichtung (31) und der unteren Heizvorrichtung (22), wenn festgestellt wird, dass das Dampfkochen beendet ist, umfasst.

## Revendications

1. Appareil de cuisson comprenant :
un corps principal (10) incluant une chambre de cuisson (12) ;
un générateur de vapeur (30) incluant un dispositif de chauffe vapeur (31) destiné à produire de la vapeur pour le chauffage d'aliments contenus dans la chambre de cuisson (12) ;
un dispositif de chauffe inférieur (22) disposé au-dessous d'une paroi de fond (12a) de la chambre de cuisson (12) et configuré pour produire de la chaleur pour chauffer les aliments ;
un module de commande (40) configuré pour commander le dispositif de chauffe vapeur (31) et le dispositif de chauffe inférieur (22) ;
une partie de collecte (12b) d'eau en retrait destinée à recueillir de l'eau dans la paroi de fond (12a) de la chambre de cuisson (12),
dans lequel le module de commande (40) est configuré pour faire fonctionner le dispositif de chauffe vapeur (31) afin de produire de la vapeur lorsqu'un mode de cuisson à la vapeur est sélectionné, et pour mettre en marche le dispositif de chauffe inférieur (22) pendant que la cuisson à la vapeur est en cours, de sorte que de l'eau recueillie dans la partie de collecte (12b) d'eau en retrait est chauffée par le dispositif de chauffe inférieur (22), en étant ainsi évaporée,
**caractérisé en ce que**
le module de commande (40) est configuré pour mettre en marche le dispositif de chauffe inférieur (22) lorsqu'un espace de temps préétabli s'est écoulé après le commencement de la cuisson à la vapeur.

2. Appareil de cuisson selon la revendication 1, dans lequel le module de commande (40) est configuré pour arrêter simultanément le dispositif de chauffe vapeur (31) et le dispositif de chauffe inférieur (22), lorsqu'il est déterminé que la cuisson à la vapeur est finie.

3. Appareil de cuisson selon la revendication 1 ou 2, dans lequel le module de commande (40) est configuré pour mettre en marche/arrêter à plusieurs reprises le dispositif de chauffe inférieur (22) jusqu'à ce que soit finie la cuisson à la vapeur.

4. Appareil de cuisson selon la revendication 1, dans lequel le module de commande (40) est configuré pour arrêter le dispositif de chauffe inférieur (22) avant que soit finie la cuisson à la vapeur et pour arrêter le dispositif de chauffe vapeur (31) lorsqu'il est déterminé que la cuisson à la vapeur est finie.

5. Appareil de cuisson selon l'une quelconque des revendications précédentes, comprenant en outre au moins un(e) parmi :
un orifice d'amenée (33) de vapeur disposé dans une paroi latérale de la chambre de cuisson (12) ;
un réservoir d'eau configuré pour stocker de l'eau destinée à produire de la vapeur destinée à être amenée à la chambre de cuisson (12) ;
une pompe d'amenée (34) d'eau configurée pour amener de l'eau au réservoir d'eau ;
une pompe de drainage (35) destinée à décharger de l'eau du réservoir d'eau.

6. Appareil de cuisson selon la revendication 5, dans lequel le module de commande (40) est configuré pour :
lorsqu'un mode de cuisson à la vapeur est sélectionné, faire fonctionner la pompe d'amenée (34) d'eau de sorte que de l'eau amenée au réservoir d'eau est amenée à la chambre de cuisson (12) via l'orifice d'amenée (33) de vapeur avant que le dispositif de chauffe vapeur (31) fonctionne, et
faire fonctionner le dispositif de chauffe vapeur (31) et le dispositif de chauffe inférieur (22) après que l'eau a été amenée à la chambre de cuisson (12).

7. Appareil de cuisson selon la revendication 5 ou 6, dans lequel le module de commande (40) est configuré pour faire fonctionner la pompe de drainage (35) afin de décharger une partie de l'eau du réservoir d'eau après que la pompe d'amenée (34) d'eau a fonctionné et avant que le dispositif de chauffe vapeur (31) ne fonctionne.

8. Appareil de cuisson selon la revendication 5, 6 ou 7, dans lequel le module de commande (40) est configuré pour arrêter le dispositif de chauffe inférieur (22) après que le dispositif de chauffe inférieur (22) a fonctionné pendant un espace de temps préétabli.

9. Appareil de cuisson selon l'une quelconque des revendications précédentes, dans lequel le module de commande (40) est configuré pour mettre en marche le dispositif de chauffe inférieur (22) une ou plusieurs fois jusqu'à ce que la cuisson à la vapeur soit finie, après que le dispositif de chauffe inférieur (22) a été arrêté.

10. Procédé pour commander l'appareil de cuisson selon l'une quelconque des revendications précédentes, conduit par le module de commande (40), le procédé comprenant les étapes consistant à :
démarrer la cuisson à la vapeur et faire fonctionner le dispositif de chauffe vapeur (31) pour produire de la vapeur destinée à être amenée à la chambre de cuisson (12) ;
produire de la chaleur pour chauffer les aliments au moyen du dispositif de chauffe inférieur (22) disposé au-dessous d'une paroi de fond (12a) de la chambre de cuisson (12).
recueillir de l'eau dans la partie de collecte (12b) d'eau en retrait disposée dans la paroi de fond (12a) de la chambre de cuisson (12),
**caractérisé par** les étapes consistant à :
déterminer si un espace de temps préétabli s'est écoulé après que la cuisson à la vapeur a démarré ;
mettre en marche le dispositif de chauffe inférieur (22) disposé au-dessous de la paroi de fond (12a) de la chambre de cuisson (12) lorsqu'il est déterminé que l'espace de temps préétabli s'est écoulé, de sorte que de l'eau recueillie dans la partie de collecte (12b) d'eau en retrait est chauffée par le dispositif de chauffe inférieur (22), en étant ainsi évaporée.

11. Procédé selon la revendication 10, comprenant en outre :
arrêter le dispositif de chauffe inférieur (22) afin que soit finie la cuisson à la vapeur ; et
arrêter le dispositif de chauffe vapeur (31) lorsqu'il est déterminé que la cuisson à la vapeur est finie.

12. Procédé selon la revendication 10 ou 11, comprenant en outre mettre en marche le dispositif de chauffe inférieur (22) et ensuite arrêter le dispositif de chauffe inférieur (22) une ou plusieurs fois avant que soit finie la cuisson à la vapeur, après que le dispositif de chauffe inférieur (22) a été arrêté.

13. Procédé selon la revendication 10, comprenant en outre arrêter le dispositif de chauffe vapeur (31) et le dispositif de chauffe inférieur (22) lorsqu'il est déterminé que la cuisson à la vapeur est finie.
